# EUROPEAN PATENT SPECIFICATION

(11) **EP 2 716 476 B1**
(45) Date of publication and mention of the grant of the patent: **17.08.2016**
(21) Application number: 12789154.7
(22) Date of filing: 25.05.2012
(51) Int. Cl.: B60C 9/08, B60C 13/02

(54) **TIRE**
REIFEN
PNEU

(30) Priority: 26.05.2011 JP 2011118155
(43) Date of publication of application: 09.04.2014
(73) Proprietor: Bridgestone Corporation, Tokyo 104-8340 (JP)
(72) Inventor: WAKI, Yoshiyuki, Tokyo 187-8531 (JP)
(74) Representative: Oxley, Robin John George
(86) International application number: PCT/JP2012/063485
(87) International publication number: WO 2012/161312

(56) References cited:
- JP-A- 2001 206 024
- JP-A- 2001 206 024
- JP-A- 2009 029 379
- JP-A- 2009 160 992
- JP-A- 2009 160 992
- JP-A- 2011 051 573
- JP-A- 2011 051 573

## Description

### Technical Field

The present invention relates to a tire provided with one pair of bead cores and a carcass layer having a toroidal shape that extends between such one pair of bead cores.

### Background Art

Conventionally, there is known a tire provided with one pair of bead cores, a carcass layer having a toroidal shape that extends between such one pair of bead cores, a belt layer disposed so as to be adjacent to the carcass layer, and a rubber layer covering the bead cores, the carcass layer, and the belt layer.

The tire is provided with a bead portion having a bead core, a tread portion having a tire step face, a side wall portion forming a side face of the tire, and a shoulder portion provided so as to extend between the side wall portion and the tread portion.

Here, it is known to generate a noise due to an interaction with the tire and a road surface together with rotation of the tire. As a technique of reducing such a noise, there is proposed a technique of disposing a sheet-shaped rubber with a higher damping property than that of a tread rubber in a part (hereinafter, referred to as a tread rubber) constituting a tread portion (for example, Patent Literature 1).

### Citation List

### Patent Literature

Patent Literature 1: Japanese Patent Application Publication No. 2002-120512. Attention is also drawn to the disclosures of JP2009 160992, JP2001 206024, and JP2009 029379.

### Summary of the Invention

However, in the tire described above, a rigidity of a tread portion including a sheet-shaped rubber is decreased depending upon disposition of the sheet-shaped rubber. Therefore, a rolling resistance of the tire increases.

Accordingly, the present invention has been made in order to solve the problem described above, and it is an object of the present invention to provide a tire which is capable of reducing a noise while restraining an increase in rolling resistance.

The present invention provides a tire according to claim 1.

A tire according to a first feature comprises one pair of bead cores and a carcass layer having a toroidal shape that extends between the one pair of bead cores. The carcass layer is folded back to an outside in a tire width direction at the bead cores. With respect to an end portion of the carcass layer folded back at the bead cores, a plurality of wall members are provided which extend in the tire width direction, the plurality of protrusions is provided at the same radial height of the end portion of the carcass layer in a tire radial direction. The plurality of wall members are provided so as to be spaced from one another along a tire circumferential direction.

In the first feature, among the plurality of wall members, one wall member is shaped such that a size in the tire circumferential direction is larger than a size in a tire radial direction.

In the first feature, the plurality of wall members protrude to an outside in the tire width direction from a surface of the tire.

In the first feature, the number of the plurality of wall members is 8 or more.
which is capable of reducing a noise while restraining an increase in rolling resistance.

### Brief Description of the Drawings

[Fig. 1] Fig. 1 is a diagram showing a tire 100 according to the first embodiment.
[Fig. 2] Fig. 2 is a diagram showing a tire 100 according to the first embodiment.
[Fig. 3] Fig. 3 is a diagram showing wall members 200 according to the first embodiment.
[Fig. 4] Fig. 4 is a diagram showing wall members 200 according to the first embodiment.
[Fig. 5] Fig. 5 is a diagram showing the mode of vibration of the conventional tire.
[Fig. 6] Fig. 6 is a diagram showing wall members 200 according to the first modification.
[Fig. 7] Fig. 7 is a diagram showing Evaluation Result 1.
[Fig. 8] Fig. 8 is a diagram showing Evaluation Result 2.
[Fig. 9] Fig. 9 is a diagram showing Evaluation Result 2.
[Fig. 10] Fig. 10 is a diagram showing Evaluation Result 3.

### Description of the Embodiment

Hereinafter, the tire according to the embodiment of the present invention will be described. Note that, in the following description of the drawings, the same or similar reference numerals are used to designate the same or similar parts.

It will be appreciated that the drawings are schematically shown and the ratio and the like of each dimension are different from the real ones. Therefore, a specific dimension should be determined in diagram of the following description. Moreover, among the drawings, the respective dimensional relations or ratios may differ.

### [Description of Embodiments]

The tire according to the embodiments is provided with one pair of bead cores and a carcass layer having a toroidal shape that extends between such one pair of bead cores. In the tire, the carcass layer is folded back to the outside in a tire width direction at the bead core. With respect to an end portion of the carcass layer that is folded back at the bead core, a plurality of wall members are provided at positions in the tire width direction. The plurality of wall members are provided so as to be spaced from one another along a tire circumferential direction.

As a result of an utmost study, the inventors found out that a deformation at a boundary (hereinafter, referred to as a rigidity stepped portion) at which a rigidity varies in the side wall portion would influence the noise associated with vibration of the tire. In the embodiments, with respect to an end portion (that is, the rigidity stepped portion), a plurality of wall members are provided at the positions along the tire width direction. Therefore, the deformation of the rigidity stepped portion can be restrained, and the noise associated with the vibration of the tire can be restrained.

In addition, as the result of the utmost study, the inventors found out that the mode of vibration of the tire causing noise has a periodicity along the tire circumferential direction. In the embodiments, the plurality of wall members are provided so as to be spaced from one another along the tire circumferential direction. Therefore, the vibration having the periodicity can be restrained along the tire circumferential direction, and the noise associated with the vibration of the tire can be restrained.

Moreover, there is no need to provide a sheet-shaped rubber with a higher damping property than that of a tread rubber in a tread portion, and thus, the rolling resistance is prevented to be getting worse.

### [First Embodiment]

### (Structure of Tire)

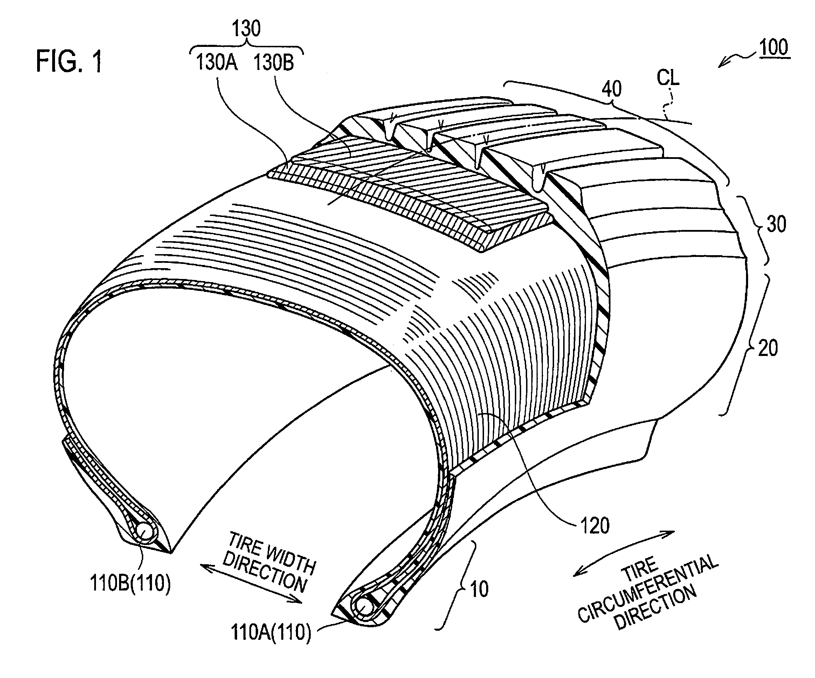

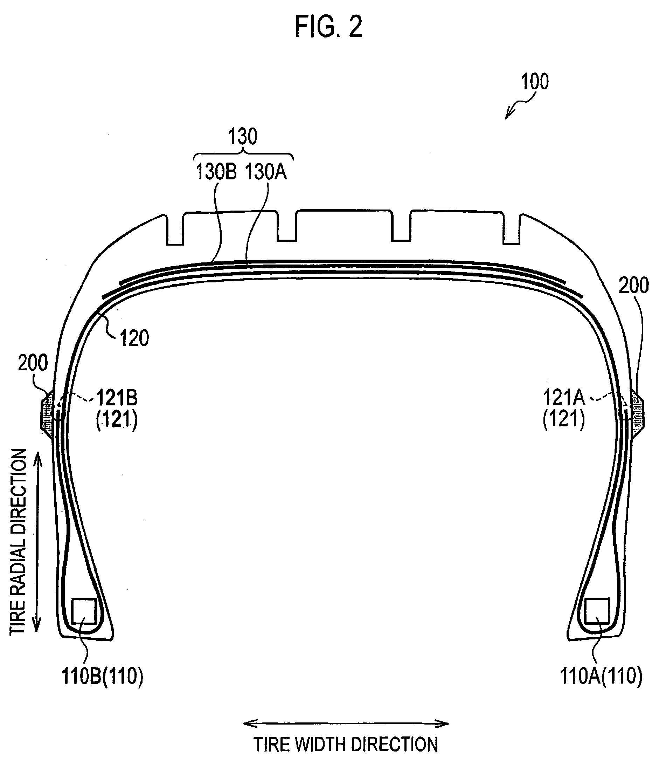

Hereinafter, a structure of the tires according to the first embodiment will be described. Fig. 1 and Fig. 2 are diagrams showing a tire 100 according to the first embodiment.

First, the tire 100, as shown in Fig. 1, has a bead portion 10, a side wall portion 20, a shoulder portion 30, and a tread portion 40.

The bead portion 10 is provided at the innermost side in the tire radial direction among the elements constituting the tire 100. The bead portion 10 is continuously provided along the tire circumferential direction. The bead portion 10 is an element for fixing the tire 100 to a rim. It is to be noted that the bead portion 10 is covered with a rubber.

The side wall portion 20 is provided outside in the tire radial direction with respect to the bead portion 10, among the elements constituting the tire 100. The side wall portion 20 is continuously provided along the tire circumferential direction. The side wall portion 20 constitutes a side face of the tire 100. It is to be noted that the side wall portion 20 is covered with a rubber.

The shoulder portion 30 is provided so as to extend between the side wall portion 20 and the tread portion 40 among the elements constituting the tire 100. The shoulder portion 30 is continuously provided along the tire circumferential direction. It is to be noted that the shoulder portion 30 is covered with a rubber.

The tread portion 40 is an element constituting a tire stepping surface that grounds on a road surface, among the elements constituting the tire 100. The tread portion 40 is continuously provided along the tire circumferential direction. On the tire stepping surface of the tread portion 40, for example, there are provided a groove (a circumferential groove) extending along the tire circumferential direction and a tread pattern formed by a (widthwise) groove extending along the tire width direction.

Second, the tire 100, as shown in Fig. 1 and Fig. 2, has a bead core 110, a carcass layer 120, and a belt layer 130.

The bead core 110 has a bead core 110A and a bead core 110B, and constitutes a bead portion 10. The bead core 110 has a ring shape, and is configured by bead wires (not shown).

A carcass layer 120 has a toroidal shape that extends between the bead core 110A and the bead core 110B. The carcass layer 120 is configured by a plurality of carcass cords (not shown) extending along the tire radial direction (or along the tire width direction), for example. The carcass layer 120 is folded back to the outside in the tire width direction at the bead core 110.

End portions 121 (an end portion 121A and an end portion 121B) of the folded carcass layer 120, as shown in Fig. 2, are positioned at the side wall portion 20. The end portions 121 of the folded carcass layer 120 may be positioned at the bead portion 10.

A belt layer 130 has a belt layer 130A and a belt layer 130B, and constitutes a tread portion 40. The belt layer 130 is disposed at the outside in the tire radial direction with respect to the carcass layer 120. The belt layer 130 has a structure in which a belt cord is covered with a rubber. The belt cord provided in the belt layer 130A may cross a belt cord provided in the belt layer 130B.

In the first embodiment, as shown in Fig. 2, with respect to the end portions 121 of the folded carcass layer 120, a plurality of wall members 200 are provided at the positions in the tire width direction. The plurality of wall members 200 are provided so as to be spaced from one another along the tire circumferential direction.

### (Detailed Description of Wall Members)

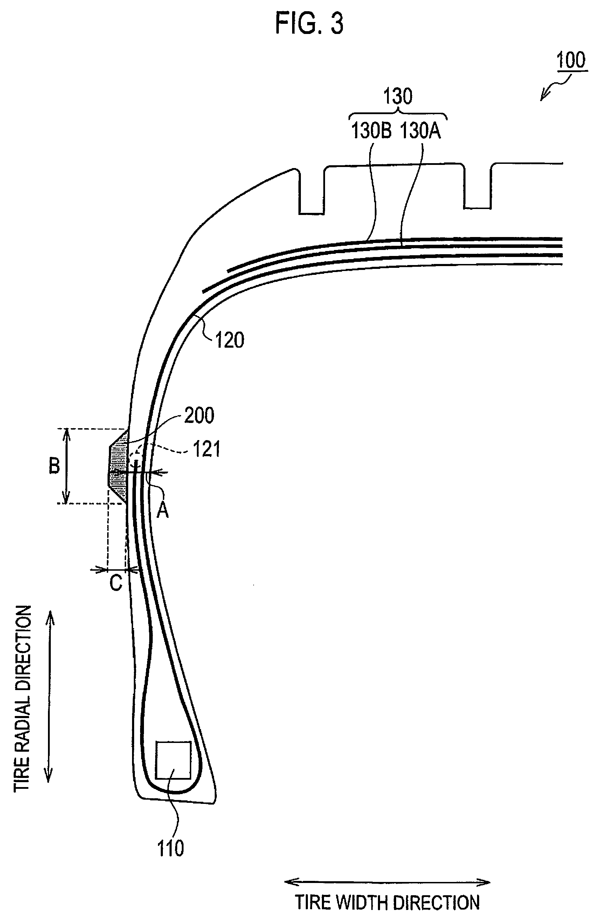

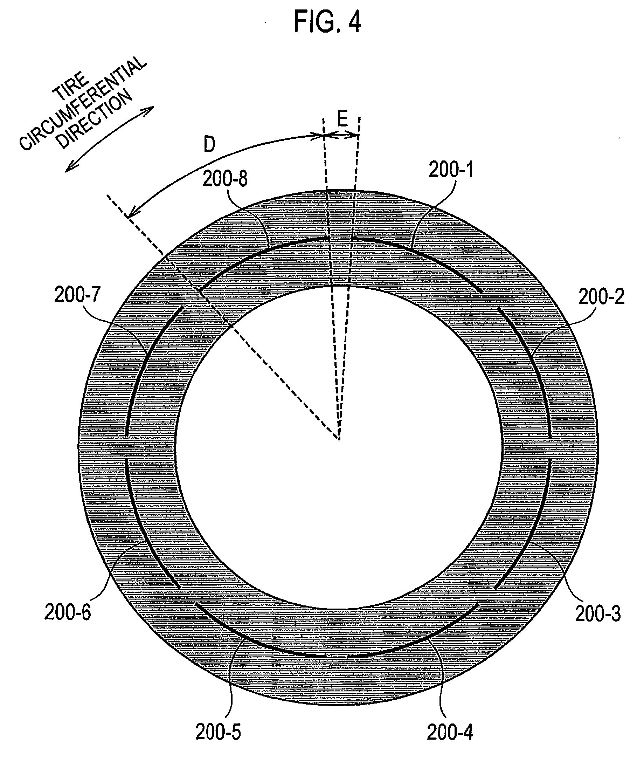

Hereinafter, wall members according to the first embodiment will be described in detail. Fig. 3 and Fig. 4 are diagrams showing details of on wall members 200 according to the first embodiment.

First, the wall members 200, as shown in Fig. 3, are disposed at the outside in the tire width direction with respect to the end portions 121 of the folded carcass layer 120. In more detail, the wall members 200 protrude to the outside in the tire width direction from a surface of the tire 100.

Here, in the portions in which the wall members 200 are to be provided, a portion (for example, a side wall portion 20) excluding the wall members 200 has a thickness A in the tire width direction. The wall member 200 has a height B in the tire radial direction. The wall member 200 has a thickness C in the tire width direction. It is to be noted that the height B and the thickness C can be shown as follows. First, in the range of the side wall portion 20 excluding the wall members 200, a continuous imaginary line is defined along a surface of the tire 100 (a surface of the side wall portion 20). The height B is a height in the tire radial direction in a region protruding to the outside in the tire width direction with respect to such an imaginary line (a gray region of Fig. 3). The thickness C is a thickness in the tire width direction in a region protruding to the outside in the tire width direction with respect to such an imaginary line (the gray region of Fig. 3).

In such a case, it is preferable that the thickness A, the height B, and the thickness C have at least one relationship from among "C > 0.5A" and "A < B < 5A" (Refer to Evaluation Result 2 to be described later).

For example, it is preferable that the thickness A be in a range of "2 mm to 6 mm", it is preferable that the height B be within a range of 10 mm to 16 mm", and it is preferable that the thickness C be in a range of "2 mm to 4 mm". As one example, it is preferable that the thickness A be 4.8 mm, the height B be 15.0 mm, and the thickness C be 2.5 mm.

In addition, as shown in Fig. 3, it is preferable that a sectional shape of the wall member 200 be trapezoidal in the cross section of the tire radial direction and the tire width direction. It is to be noted that in the cross section of the tire radial direction and the tire width direction, an outside wall face at the outside in the tire radial direction of the wall member 200 and an inside wall face inside in the tire radial direction of the wall member 200 may be formed in an arc shape. Thus, in the cross section of the tire radial direction and the tire width direction, it is preferable that the outside wall face at the outside in the tire radial direction of the wall member 200 and the inside wall face at the inside in the tire radial direction of the wall members 200 be gradually connected to a surface of the tire 100 (a surface of the side wall portion 20).

Second, in the wall members 200, as shown in Fig. 4, a plurality of wall members 200 (hereinafter, referred to as eight wall members 200) are provided so as to be spaced from one another along the tire circumferential direction. It is preferable that the number of the plurality of wall members 200 be 8 or more. In addition, it is preferable that the number of the plurality of wall members 200 be 36 or less (Refer to Evaluation Result 3 to be described later).

Here, it is preferable that the wall member 200 have a shape of which a size in the tire circumferential direction is larger than a size in the tire radial direction in order to effectively restrain vibration with respect to the tire width direction.

In addition, the size in the tire circumferential direction of the wall member 200 is a length taken along the tire circumferential direction at a central position in the tire radial direction of the wall member 200. It is to be noted that as long as there exists the central position in the tire radial direction of the wall member 200, the position in the tire width direction of the wall member 200 is not limited in particular.

Further, as shown in Fig. 4, it is preferable that a size D in the tire circumferential direction of the wall member 200 and a gap E between two wall members 200 that are adjacent to each other satisfy a relationship of "5 : 5 ≤ D : E ≤ 9 : 1" (Refer to Evaluation Result 4 to be described later).

### (Mode of Vibration of Tire)

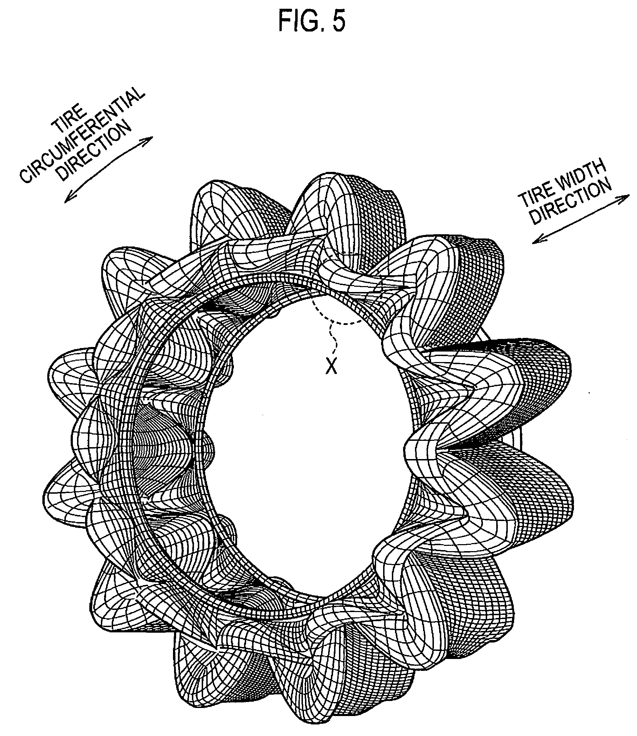

Hereinafter, a mode of vibration of a conventional tire will be described. Fig. 5 is a diagram showing the mode of vibration of the conventional tire.

As described above, the inventors found out that as the result of the upmost study, the mode of vibration of the tire causing a noise would have a periodicity along the tire circumferential direction. In more detail, as shown in Fig. 5, a large vibration X with respect to the tire width direction periodically arises along the tire circumferential direction.

It should be kept in mind that in the first embodiment, the vibration X is restrained because the wall members 200 are provided.

### (Operation and Advantageous Effects)

In the first embodiment, with respect to the end portions 121 of the carcass layer 120 that is folded back at the bead core 100 (that is, the rigidity stepped portion), a plurality of wall members 200 are provided at the positions in the tire width direction. Therefore, a deformation of the rigidity stepped portion can be restrained, and the noise associated with vibration of the tire 100 can be restrained.

In the first embodiment, the plurality of wall members 200 are provided so as to be spaced from one another along the tire circumferential direction. Therefore, the vibration having a periodicity along the tire circumferential direction can be restrained, and the noise associated with the vibration of the tire can be restrained.

In addition, there is no need to provide a sheet-shaped rubber with a higher damping property than that of a tread rubber in the wall member 200, and thus, the rolling resistance can be prevented to be getting worse.

### [Modification Example 1]

Hereinafter, Modification Example 1 of the first embodiment will be described. Hereinafter, differences from the first embodiment will be mainly described.

In the first embodiment, the wall members 200 protrude to the outside in the tire width direction from a surface of the tire 100.

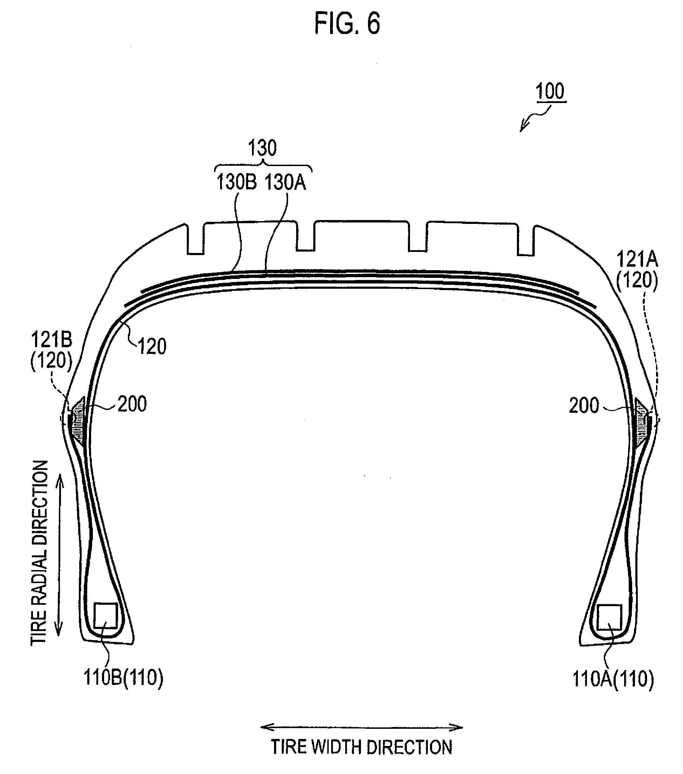

On the other hand, in Modification Example 1, the wall member 200, as shown in Fig. 6, is provided in a rubber constituting the surface of the tire 100 (for example, the side wall portion 20). In more detail, the wall member 200 is provided so as to be interposed between the carcass layers 120 at a position at which the carcass layers 120 overlap on each other in the tire width direction.

It should be kept in mind that in Modification Example 1 as well, as in the first embodiment, with respect to the end portions 121 of the folded carcass layer 120, the wall members 200 are disposed at the positions in the tire width direction.

However, with respect to an effect of noise level reduction, it should be kept in mind that the effect of the first embodiment is higher than that of Modification Example 1.

### [Evaluation Results]

Hereinafter, evaluation results of the tires according to the embodiments will be described. In more detail, the characteristics of tires were evaluated by mounting the tires to a vehicle and then performing drive tests of the vehicle in accordance with the conditions set forth below.

### (Common Conditions)

Tire size = 265/70R17
Internal Pressure of tire = 180 kPa
Load = 8.9 kN

### (Evaluation Result 1)

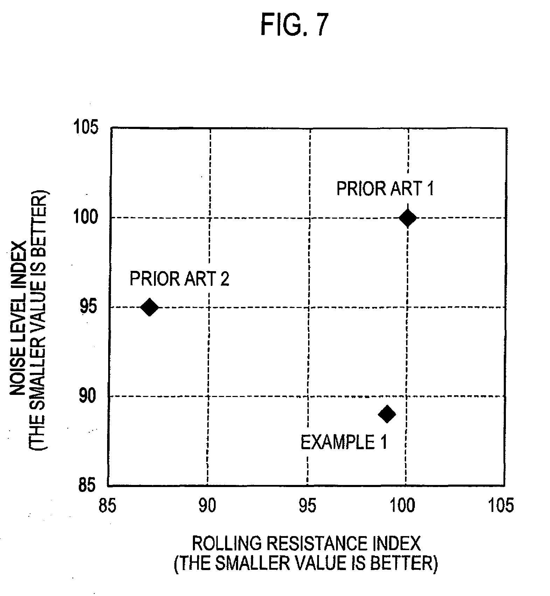

In Evaluation Test 1, as to tires according to Prior Art 1, Prior Art 2, and Example 1, noise level and rolling resistance were evaluated by index number. Fig. 7 is a diagram showing Evaluation Result 1.

The tires according to Prior Art 1 are general tires for which no countermeasures against noises are taken. That is, the tire is a tire in which a sheet-shaped rubber with a higher damping property than that of a tread rubber is not provided in a tread portion, and the wall members according to the first embodiment are not provided.

The tires according to Prior Art 2 are tires in which a sheet-shaped rubber with a higher damping property than that of a tread rubber is provided in a tread portion.

The tires according to Example 1 are tires in which the wall members according to the first embodiment are provided. Eight wall members are provided in the tires according to Example 1.

As shown in Fig. 7, in Example 1, in comparison with Prior Art 1, the noise level was improved by about 10%, and in comparison with Prior Art 2, the noise level was improved by about 5%. In addition, in Example 1, in comparison with Prior Art 1, the rolling resistance hardly decreased, and in comparison with Prior Art 2, the rolling resistance was remarkably improved.

### (Evaluation Result 2)

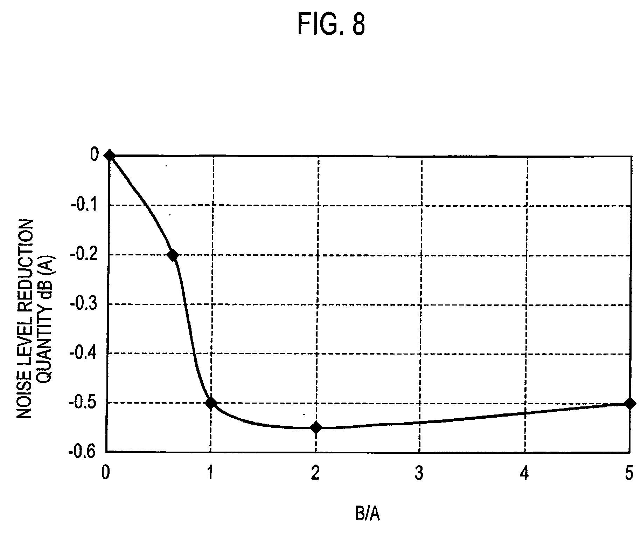

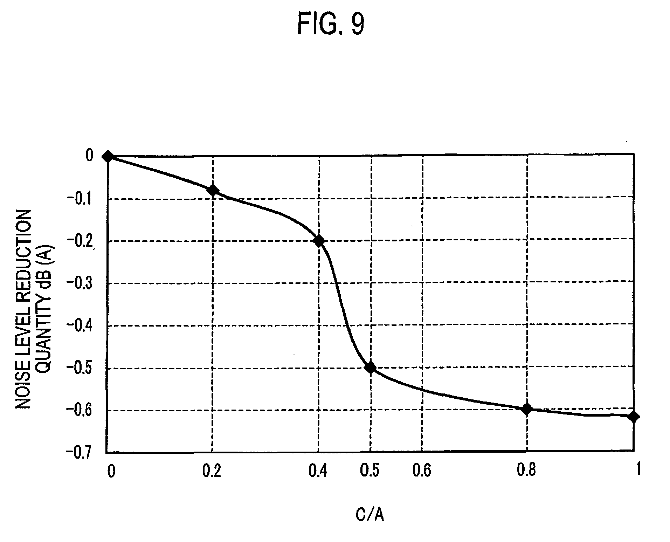

In Evaluation Result 2, as to the tires according to Example 1, a noise level reduction quantity (dB) was evaluated by changing the parameters below. Fig. 8 and Fig. 9 are diagrams showing Evaluation Result 2.
A: Thickness in tire width direction of portions in which the wall members are to be provided, excluding thickness of the wall members (Refer to Fig. 3)
B: Height of the wall member in tire radial direction (Refer to Fig. 3)
C: Thickness of the wall member in tire width direction (Refer to Fig. 3)

First, a case in which a parameter of B/A was changed when C/A = 0.5 will be described with reference to Fig. 8. As shown in Fig. 8, in the case where B/A is larger than 1 and is smaller than 5, an effect of noise level reduction of 0.5 dB or more was obtained. Therefore, it was verified to be preferable that A and B satisfy a relationship of A < B < 5A.

Second, a case in which a parameter of C/A was changed when B/A = 1 will be described with reference to Fig. 9. As shown in Fig. 9, in the case where C/A is larger than 0.5, the effect of noise level reduction of 0.5 dB or more was obtained. Therefore, it was verified to be preferable that A and C satisfy a relationship of C > 0.5A.

### (Evaluation Result 3)

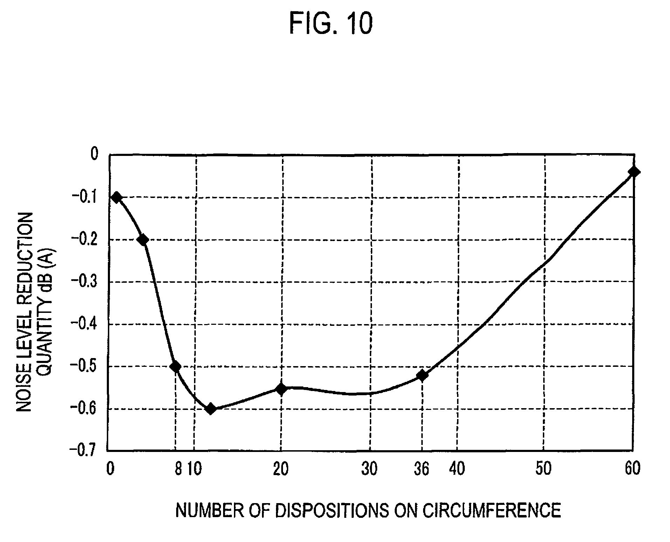

In Evaluation Result 3, as to the tires according to Example 1, the noise level reduction quantity (dB) was evaluated by changing the number of wall members. Fig. 10 is a diagram showing Evaluation Result 3.

As shown in Fig. 10, in the case where the number of wall members is 8 or more and 36 or less, the effect of noise level reduction of 0.5 dB or more was obtained.

### (Evaluation Result 4)

In Evaluation Result 4, as to the tires according to Example 1, the noise level reduction quantity (dB) was evaluated by changing the parameters below. Table 1 is a table showing Evaluation Result 4.
D: Size in tire circumferential direction of the wall members 200 (Refer to Fig. 4)
E: Gap between two wall members 200 adjacent to each other (Refer to Fig. 4)
[Table 1]

**TABLE. 1**

| | | | | | |
|---|---|---|---|---|---|
| D:E | 3:7 | 5:5 | 7:3 | 9:1 | 10:0 |
| Noise level reduction quantity dB (A) | 0.1 | 0.5 | 0.6 | 0.5 | 0.3 |

A case in which parameters of D and E were changed when the number of the wall members 200 is 8 will be described with reference to Table 1. As shown in Table 1, in the case where D : E is 5 : 5 or more and 9 : 1 or less, the effect of noise level reduction of 0.5 dB or more was obtained. Therefore, it was verified to be preferable that D and E satisfy a relationship of "5 : 5≤ D : E ≤ 9: 1".

### [Other Embodiments]

The present invention has been described according to the aforementioned embodiments. However, it must not be understood that the discussions and the drawings constituting a part of this disclosure limit the present invention. From this disclosure, various alternative embodiments, examples and operational techniques are apparent to those skilled in the art.

In the embodiments, with respect to the end portions 121 of the folded carcass layer 120, the wall members 200 are disposed at the positions in the tire width direction. The wall members 200 are only required to reinforce the end portions 121 (the rigidity stepped portions) of the carcass layer 120, and thus, it is a matter of course that the wall members may be disposed with a slight tolerance with respect to the end portions 121 in the tire radial direction.

### Industrial Applicability

As described above, the present invention can provide a tire which is capable of reducing a noise while restraining an increase in rolling resistance.

## Claims

1. A tire (100) comprising one pair of bead cores (110) and a carcass layer (120) having a toroidal shape that extends between the one pair of bead cores, wherein
the carcass layer is folded back to an outside in a tire width direction at the bead cores,
with respect to an end portion (121) of the carcass layer folded back at the bead cores, a plurality of wall members (200) are provided which extend in the tire width direction and which create corresponding protrusions on a side wall portion (20) of the tire,
the plurality of protrusions is provided at the same radial height of the end portion of the carcass layer in a tire radial direction, and
the plurality of wall members are provided so as to be spaced from one another along a tire circumferential direction, **characterized in that**:
a portion, in which the wall members are to be provided, excluding wall members, has a thickness A in the tire width direction;
the wall members have a height B in the tire radial direction;
the wall members have a thickness C in the tire width direction; and
the relationship of "C > 0.5A" and the relationship of "A < B < 5A" are satisfied.

2. The tire according to claim 1, wherein among the plurality of wall members, one wall member is shaped such that a size in the tire circumferential direction is larger than a size in the tire radial direction.

3. The tire according to claim 1, wherein the plurality of wall members protrude to an outside in the tire width direction from a surface of the tire.

4. The tire according to claim 1, wherein the number of the plurality of wall members is 8 or more.

5. The tire according to claim 1, wherein the plurality of protrusions is provided only at the same radial height of the end portion of the carcass layer in the tire radial direction.

6. The tire according to claim 1, wherein
a size D in the tire circumferential direction of each wall member and a gap E between two wall members that are adjacent to each other satisfy a relationship of "5 : 5 ≤ D : E ≤ 9 : 1".

7. The tire according to claim 1, wherein
each wall member is provided so as to be interposed between the carcass layers at a position at which the carcass layers overlap on each other in the tire width direction.

## Patentansprüche

1. Reifen (100) umfassend ein Paar Wulstkerne (110) und eine Karkassenschicht (120), welche eine toroidale Form aufweist, welche sich zwischen dem einen Paar Wulstkernen erstreckt, wobei
die Karkassenschicht in einer Reifenbreitenrichtung an den Wulstkernen auswärts zurückgefaltet ist,
mit Bezug auf einem Endabschnitt (121) des an den Wulstkernen zurückgefalteten Wulstkerns, eine Mehrzahl von Wandelementen (200) vorgesehen ist, welche sich in der Reifenbreitenrichtung erstrecken und welche entsprechende Vorsprünge auf einem Seitenwandabschnitt (20) des Reifens bilden,
wobei die Mehrzahl von Vorsprüngen auf derselben radialen Höhe des Endabschnitts der Karkassenschicht in einer Reifenradialrichtung bereitgestellt ist, und
die Mehrzahl von Wandelementen so vorgesehen ist, dass sie voneinander beabstandet entlang einer Reifenumfangsrichtung angeordnet sind, **dadurch gekennzeichnet, dass**:
ein Abschnitt, in dem die Wandelemente vorzusehen sind, mit Ausnahme der Wandelemente, eine Dicke A in der Reifenbreitenrichtung aufweist;
die Wandelemente eine Höhe B in der Reifenradialrichtung aufweisen;
die Wandelemente eine Dicke C in der Reifenbreitenrichtung aufweisen; und
die Beziehung "C > 0,5A" und die Beziehung "A < B < 5A" erfüllt sind.

2. Reifen nach Anspruch 1, wobei unter der Mehrzahl von Wandelelementen, ein Wandelement so gefornlt ist dass eine Abmessung in der Reifenumfangsrichtung größer als die Abmessung in der Reifenradialrichtung ist.

3. Reifen nach Anspruch 1, wobei die Mehrzahl der Wandelemente auswärts in der Reifenbreitenrichtung von einer Fläche des Reifens ausragt.

4. Reifen nach Anspruch 1, wobei die Anzahl der Wandelemente gleich oder größer als 8 ist.

5. Reifen nach Anspruch 1, wobei die Mehrzahl der Vorsprünge nur auf derselben radialen Höhe des Endabschnitts der Karkassenschicht in der Reifenradialrichtung vorgesehen ist.

6. Reifen nach Anspruch 1, wobei
eine Abmessung D in der Reifenumfangsrichtung jedes Wandelements und ein Spalt E zwischen zwei gegenseitig anliegenden Wandelelementen die Beziehung "5:5≤D:E≤9:1" erfüllen.

7. Reifen nach Anspruch 1, wobei
jedes Wandelement so vorgesehen ist, dass es zwischen den Karkassenschichten in einer Position angeordnet ist, in der die Karkassenschichten sich in der Reifenbreitenrichtung gegenseitig überlappen.

## Revendications

1. Bandage pneumatique (10) comprenant une paire de tringles (110) et une couche de carcasse (120) de forme toroïdale s'étendant entre ladite une paire de tringles, dans lequel :
la couche de carcasse est repliée vers l'arrière, vers un extérieur dans la direction de la largeur du bandage pneumatique, au niveau des tringles ;
par rapport à une partie d'extrémité (121) de la couche de carcasse repliée vers l'arrière au niveau des tringles, plusieurs éléments de paroi (200) sont agencés, s'étendant dans la direction de la largeur du bandage pneumatique, et formant des saillies correspondantes sur une partie de paroi latérale (20) du bandage pneumatique ;
les plusieurs saillies sont formées au niveau de la même hauteur radiale de la partie d'extrémité de la couche de carcasse, dans une direction radiale du bandage pneumatique ; et
les plusieurs éléments de paroi sont agencés de sorte à être espacés les uns des autres le long de la direction circonférentielle du bandage pneumatique, **caractérisé en ce que** :
une partie, dans laquelle les éléments de paroi doivent être agencés, a, à l'exclusion des éléments de paroi, une épaisseur A dans la direction de la largeur du bandage pneumatique ;
les éléments de paroi ont une hauteur B dans la direction radiale du bandage pneumatique ;
les éléments de paroi ont une épaisseur C dans la direction de la largeur du bandage pneumatique ; et
la relation de « C > 0,5A » et la relation de « A < B < 5A » sont satisfaites.

2. Bandage pneumatique selon la revendication 1, dans lequel, parmi les plusieurs éléments de paroi, un élément de paroi est formé de sorte qu'une dimension dans la direction circonférentielle du bandage pneumatique, est supérieure à une dimension dans la direction radiale du bandage pneumatique.

3. Bandage pneumatique selon la revendication 1, dans lequel les plusieurs éléments de paroi débordent vers un extérieur dans la direction de la largeur du bandage pneumatique, d'une surface du bandage pneumatique.

4. Bandage pneumatique selon la revendication 1, dans lequel le nombre des plusieurs éléments de pari correspond à 8 ou plus.

5. Bandage pneumatique selon la revendication 1, dans lequel les plusieurs saillies son agencées uniquement au niveau de la même hauteur radiale de la partie d'extrémité de la couche de carcasse, dans la direction radiale du bandage pneumatique.

6. Bandage pneumatique selon la revendication 1, dans lequel :
une dimension D, dans la direction circonférentielle du bandage pneumatique, de chaque élément de paroi et un espace E entre deux éléments de paroi adjacents l'un à l'autre satisfont la relation de « 5 : 5 ≤ 9 : 1 ».

7. Bandage pneumatique selon la revendication 1, dans lequel :
chaque élément de paroi est agencé de sorte à être placé entre les couches de carcasse au niveau d'une position au niveau de laquelle les couches de carcasse se chevauchent l'une l'autre dans la direction de la largeur du bandage pneumatique.
